# EUROPEAN PATENT SPECIFICATION

(11) **EP 2 628 677 B1**
(45) Date of publication and mention of the grant of the patent: **16.05.2018**
(21) Application number: 13154124.5
(22) Date of filing: 06.02.2013
(51) Int. Cl.: B64C 1/06, B64C 3/18

(54) **Structural component for an aircraft or spacecraft**
Strukturkomponente für ein Flugzeug oder Raumfahrzeug
Élément structurel pour aéronef ou engin spatial

(30) Priority: 17.02.2012 DE 102012202504; 17.02.2012 US 201261599968 P
(43) Date of publication of application: 21.08.2013
(73) Proprietor: Airbus Operations GmbH, 21129 Hamburg (DE)
(72) Inventor: Vichniakov, Alexei, 21614 Buxtehude (DE); Maslennikov, Johannes, 21614 Buxtehude (DE); Goehlich, Robert Alexander, 22761 Hamburg (DE); Sayilgan, Cihangir, 20257 Hamburg (DE)
(74) Representative: Isarpatent

(56) References cited:
- WO-A2-2010/010382
- DE-A1- 3 531 028
- DE-A1-102006 002 248
- US-A- 1 803 494
- US-A1- 2011 168 840

## Description

The present invention relates to an aircraft or spacecraft.

An example of the prior art is provided by US 1,803,494.

Although they can be applied to any desired light structures with a reinforced outer skin, the present invention and the problems on which it is based will be described in more detail in relation to the inside of an aircraft fuselage.

Fuselage shells for aircraft are generally produced in a so-called light construction mode from an outer skin, which is reinforced on the inside by a structure made of stringers or longitudinal reinforcements running in the longitudinal direction of the aircraft and formers running transverse to the longitudinal direction of the aircraft as reinforcement elements. Components and structures connected with the utilisation of the aircraft, such as, for example, hold floors or passenger cabin floors, are fastened to the formers in the interior of the aircraft fuselage.

Furthermore, the fuselage diameter is determined by aerodynamic requirements, on the one hand, and a space requirement for passengers, on the other hand. Available space for structural, system and cabin elements is severely limited. This volume can only be slightly utilised, as a main proportion of routes or lines is arranged in the flight direction and undercuts between the formers are hardly utilised.

The system architecture is made more difficult by segregation specifications and the small amount of available space. Moreover, minimum spacings from the structure have to be adhered to. The routes are received at intervals by holders. Primary holder positions have to be changed in the case of optional or customer-specific systems. These holders have to be measured and manually positioned. Cabin elements are introduced after a system installation.

These factors lead to an architecture similar to an onion skin model, the structural elements, system equipment and cabin integration being the individual skins.

The installation has to primarily take place part by part. This leads to a poor utilisation of space. Furthermore, customer-specific adaptation of the primary structure is prone to faults and this can lead to increased manufacturing costs.

Against this background, an object of the present invention is to provide an improved structural component for an aircraft or spacecraft, which allows better utilisation of space and easier adaptation of the primary structure.

This object is achieved according to the invention by an aircraft or spacecraft having the features of claim 1.

The provision of the at least one second cutout between adjacent first cutouts of the former element allows an improved utilisation of space, as the at least one second cutout can be utilised to guide through or hold routes.

Furthermore, the provision of second cutouts results in a reduction in the weight of the aircraft. In addition, an improved accessibility of the former elements can be achieved. As a result, for example, when a plurality of former elements is provided, necessary former couplings can be fastened to the respective second cutouts and a simple assembly is thereby achieved. Likewise, the system installation can be facilitated by the improved accessibility of the former elements. The plurality of second cutouts may, for example, be used to install holders without the provision of additional bores of the former element. In addition, the possibility is produced of using click-in or similar principles for holders. Moreover, a reduction can be achieved in activities that do not add value during assembly such as, for example, omitting measurements for bores of holders for holding routes. Furthermore, the possibility is produced of a visual control of installed rivets.

It is preferably provided that the second cutouts are, in each case, configured as an opening in opposing side walls of the former element. This allows a facilitated accessibility of the former element.

It is advantageously provided that the opening in the opposing side walls is, in each case, arranged at the same position. The second cutout is therefore also suitable for holding the cable or hydraulic lines, so separate holders do not have to be provided. Furthermore, easy guiding of cable or hydraulic lines through the second cutouts configured in opposing side walls of the former element is made possible.

It is advantageously provided that the opening in the opposing side walls is in each case arranged at different positions. Thus, easier accessibility of the inner wall of the side wall opposing the opening can be made possible.

According to an advantageous development of the invention, it is provided that the opening in the opposing side walls is configured along a transverse axis of the former element. Because of the laying of the former elements transverse to the flight direction, the routes arranged in the flight direction may be guided linearly and guided through the second cutout of the former element.

According to an advantageous development of the invention it is provided that the former element has an omega-shaped, circular, elliptical, round-cornered or polygonal profile. This allows an adaptation to respective spatial or structural requirements.

The second cutout is configured to receive a coupling element for coupling adjacent former elements. Thus, an easy fastening of the coupling element to the former element and a secure connection of adjacent former elements can be achieved by providing the coupling element. The provision of a flange or other connecting elements on the respective former elements to connect adjacent former elements can therefore be dispensed with.

It is preferably provided that the second cutout is configured to guide cable or hydraulic lines along a longitudinal axis of the aircraft or spacecraft through the former element. Therefore, an optimal utilisation of space can be achieved. Moreover, the cable or hydraulic lines can be guided linearly, so branches or bends of the line guidance can be avoided.

The structural component thus serves as a holder for the cable or hydraulic lines, so additional holders do not have to be provided.

It is preferably provided that the second cutout is configured to receive holders, metal fittings or other structural connection elements for fastening components such as, in particular, overhead luggage compartments or side wall panels. Because of the improved accessibility of the former element, it can be used to install the above-mentioned components.

According to an advantageous development of the invention, it is provided that the former element is configured from a carbon-fibre-reinforced plastics material, a metal, a metal alloy or a hybrid material. This allows a high material strength and a low weight of the former element.

Furthermore, an aircraft or spacecraft with the structural component according to the invention is advantageously provided.

Embodiments of the invention are shown in the drawings and described in more detail in the following description.

In the figures:
Fig. 1 shows a schematic view of a portion of an aircraft fuselage with the structural component according to the invention, according to a preferred embodiment;
Fig. 2 shows a schematic view of the structural component according to the invention, according to the preferred embodiment;
Fig. 3 shows a schematic view of the structural component according to the invention, according to the preferred embodiment; and
Fig. 4 shows a schematic view of a plurality of structural components according to the invention, according to a further preferred embodiment.

In the figures, the same reference numerals designate the same or functionally the same components.

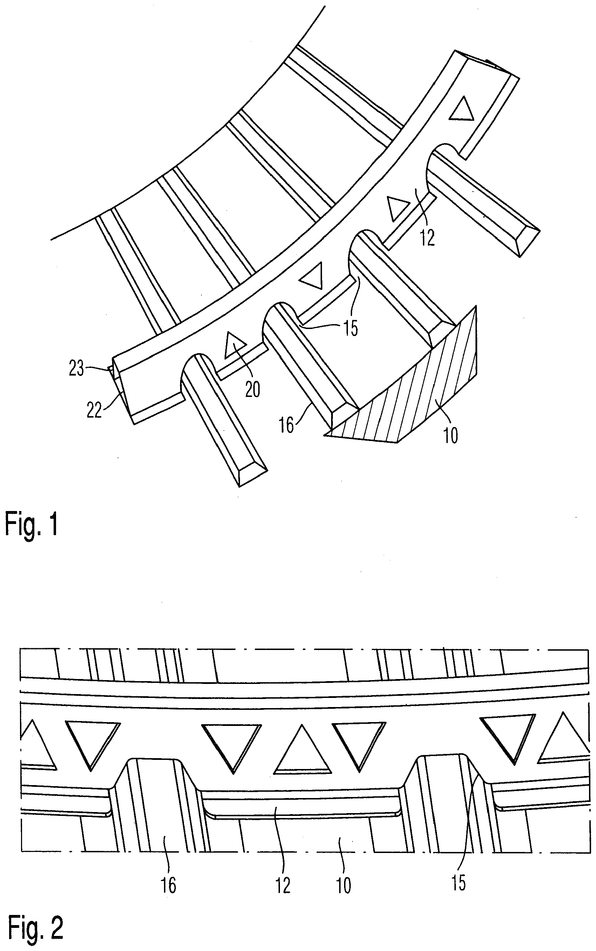

Fig. 1 shows a schematic view of a portion of an aircraft fuselage with the structural component according to the invention. The aircraft fuselage has an outer skin 10, a former element 12 and a plurality of longitudinal reinforcements 16.

The outer skin 10 of the aircraft fuselage is arcuately curved. The former element 12 is installed transverse to the flight direction and also arcuately curved in accordance with an inner contour of the outer skin 10. The former element 12, according to the preferred embodiment, has an omega-shape in one cross-section of the former element 12. The former element 12 may, however, also have any desired other shape such as, for example, a rectangular shape, a rectangular shape with rounded edges, a trapezoidal shape, a trapezoidal shape with rounded edges, a triangular shape and a triangular shape with rounded edges.

The former element 12 furthermore has a first side wall 22 and a second side wall 23, which are connected at their upper ends by a horizontal portion. The side wall 22 moreover has, at a portion adjacent to the outer skin 10, a horizontal extension or a horizontal portion, which can be fastened to the outer skin 10 by a plurality of, for example, rivets. The second side wall 23 also has, at a portion adjacent to the outer skin 10, a horizontal extension or a horizontal portion, which can be fastened to the outer skin by a plurality of rivets.

The former element 12 has a plurality of first cutouts 15 and a plurality of second cutouts 20. The plurality of first cutouts 15 is used to receive longitudinal reinforcements 16. The second cutout 20 is, in each case, arranged between adjacent first cutouts 15 of the former element 12. The plurality of first cutouts 15 is adapted to the contour or shape of the respective longitudinal reinforcements 16.

The second cutout 20, according to the preferred embodiment, has a triangular shape. Alternatively, the second portion 20 may also have any desired other shape such as, for example, a round shape, an oval shape, a rectangular shape, a trapezoidal shape or the like. The second cutout 20 is configured here, in each case, in the side walls 22, 23 of the former element 12. The second cutout 20 is, in particular, arranged in a central region of the side walls 22, 23 and, in each case, in the opposing side walls 22, 23 at the same position. An individual former element 12 is shown according to Fig. 1. The former element 12 has an omega-shaped profile. Alternatively, the structural component may have a circular, elliptical, round-cornered or polygonal profile. Moreover, the structural component may have a plurality of former elements 12, which are arranged adjacent to one another and connected by suitable former couplings. A longitudinal and/or transverse profile of the structural component may be open or closed.

The structural component shown in Fig. 1 is arranged along a longitudinal axis of the aircraft at regular intervals. In the present case, however, only one structural component is shown. By providing a plurality of structural components at regular intervals along the longitudinal axis of the aircraft, the respective structural components can be used as holders for cable or hydraulic lines, not shown, owing to the second cutouts 20 configured in the structural components.

Fig. 2 shows a schematic view of the structural component according to the invention in a perspective side view according to the preferred embodiment. In the present embodiment, a plurality of second cutouts 20 is arranged between adjacent first cutouts 15 of the former element 12. A respective cutout of the plurality of second cutouts 20 has a triangular shape. The orientation of the triangles differs from one another in such a way that respective cutouts 20 arranged adjacent to one another are rotated, in each case, through 180° with respect to their orientation. By providing the plurality of second cutouts 20 between respective adjacent first cutouts 15 of the former element 12, a plurality of cable or hydraulic lines, not shown, can be guided accordingly. The respective cutouts 20 may also have any desired other shape.

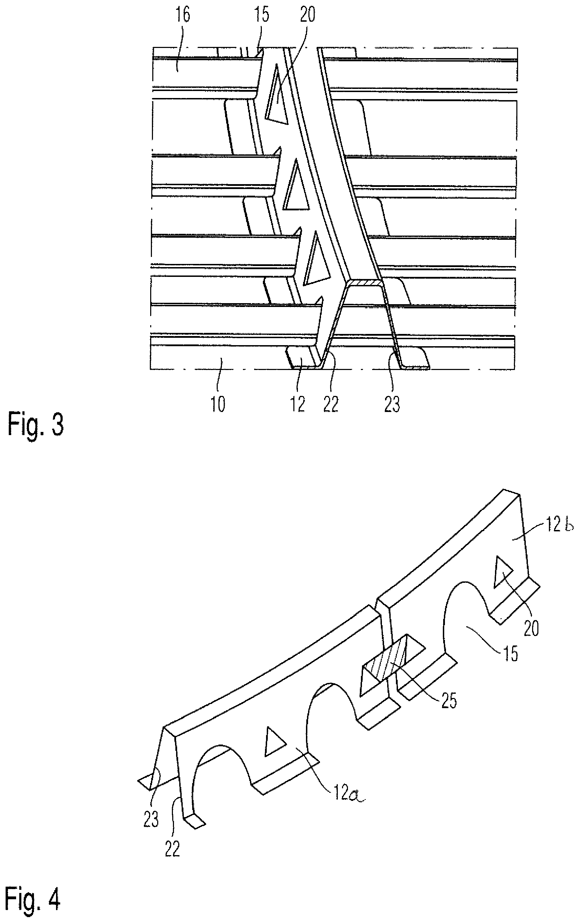

Fig. 3 shows a schematic view of the structural component according to the invention, according to the preferred embodiment. According to the embodiment, a single former element 12 of the structural component is shown. The former element 12 has an omega-shape with two opposing side walls 22, 23. The side walls 22, 23 are in each case provided with an extension or a horizontal portion in the portion adjacent to the outer skin 10. The side walls 22, 23 are furthermore connected to one another at a respective distal portion by a horizontal portion. The former element 12 may, however, also have any desired other shape. Possible other former shapes are, for example, a rectangular shape, a rectangular shape with rounded edges, a trapezoidal shape, a trapezoidal shape with rounded edges, a triangular shape and a triangular shape with rounded edges.

Fig. 4 shows a schematic view of a plurality of former elements 12 of the structural component. The plurality of former elements 12 is connected by a coupling element 25 to couple the adjacent former elements 12. The coupling element 25 is configured in such a way that it is connected to a respective second portion 20 of respective adjacent former elements 12. The coupling mechanism of the coupling element 25 is not shown in more detail here. It may, for example, be a double-L angle, which is arranged on either side of the respective former elements 12, i.e. on respective side walls 22, 23 of the former elements 12. Alternatively, another suitable coupling mechanism can also be provided.

The structural component or former element 12 is configured from a carbon-fibre-reinforced plastics material. This may, for example, comprise so-called prepreg materials, textile materials, thermoplastic materials, titanium materials, Al/Al-Li/Al-Mg-Sc materials.

The former elements 12 may be fastened to the outer skin 10 in various ways. For example, the formers 12 may be riveted on, glued on, welded on or connected using other suitable rivetless methods.

Apart from the use of the present invention in aircraft and spacecraft, an application in space stations, satellites, masts or towers of wind turbines and in automotive and ship construction is also conceivable.

### List of reference numerals

- 10: outer skin
- 12: former element
- 15: first cutout
- 16: longitudinal reinforcement
- 20: second cutout
- 22: first side wall
- 23: second side wall
- 25: coupling element

## Claims

1. Aircraft or spacecraft having an outer skin (10) and a structural component, the structural component comprising:
a first former element (12a) and a second former element (12b) reinforcing the outer skin (10), which are arcuately curved in their longitudinal direction in accordance with an inner contour of the outer skin (10), the first and second former elements (12a, 12b) being spaced apart and each comprising a first side wall (22) and a second side wall (23), respective foot portions for attaching each former element (12a, 12b) to the outer skin formed at first ends of said first and second side wall (22, 23), and a horizontal portion for connecting said first and second side wall formed at second ends of said first and second side wall (22, 23), wherein the first and second former elements (12a, 12b) each have a plurality of first cutouts (15) receiving longitudinal reinforcements (16) and a plurality of second cutouts (20), which is configured between adjacent first cutouts (15) of the first former element (12a) and the second former element (12b), wherein exactly one of the plurality of second cutouts is arranged at at least one longitudinal end portion of the first former element (12a) and the second former element (12b) and receives a coupling element (25) coupling the first former element (12a) and the second former element (12b), the exactly one second cutout being, in each case, configured as an opening in said first and second side wall (22, 23) of the first former element (12a) and the second former element (12b), wherein the coupling element (25) is mounted to the second cutout (20) arranged at the longitudinal end portion of the first former element (12a) and to the second cutout (20) arranged at the longitudinal end portion of the second former element (12b) adjacent to the first former element (12a) on either side of the respective former elements (12a, 12b).

2. Aircraft or spacecraft according to claim 1, **characterised in that** the opening is, in each case, arranged at the same position in the opposing side walls such that the opening arranged in a first side wall (22) and the opening arranged in a second side wall (23) are aligned to each other in a direction perpendicular to a longitudinal direction of the first former element (12a).

3. Aircraft or spacecraft according to claim 1, **characterised in that** the opening is, in each case, arranged at different positions in the opposing side walls such that the opening arranged in a first side wall (22) and the opening arranged in a second side wall (23) are out of alignment to each other in a direction perpendicular to a longitudinal direction of the first former element (12a).

4. Aircraft or spacecraft according to any one of claims 1 to 3, **characterised in that** the opening in the opposing side walls is configured along a transverse axis of the first former element (12a).

5. Aircraft or spacecraft according to any one of the preceding claims, **characterised in that** the first former element (12a) has an omega-shaped, circular, elliptical, round-cornered or polygonal profile.

6. Aircraft or spacecraft according to any one of the preceding claims, **characterised in that** the second cutout (20) is configured to guide cable or hydraulic lines along a longitudinal axis of the aircraft or spacecraft through the first former element (12a).

7. Aircraft or spacecraft according to any one of the preceding claims, **characterised in that** the second cutout (20) is configured to receive holders, metal fittings or other structural connection elements to fasten components, such as, in particular, overhead luggage compartments or side wall panels.

8. Aircraft or spacecraft according to any one of the preceding claims, **characterised in that** the first former element (12a) is configured from a carbon-fibre-reinforced plastics material, a metal, a metal alloy or a hybrid material.

## Patentansprüche

1. Luftfahrzeug oder Raumfahrzeug mit einer Außenhaut (10) und einer Strukturkomponente, wobei die Strukturkomponente Folgendes umfasst:
ein erstes formgebendes Element (12a) und ein zweites formgebendes Element (12b), welche die Außenhaut (10) verstärken, die in ihrer Längsrichtung gemäß einer inneren Kontur der Außenhaut (10) bogenförmig gekrümmt sind, wobei das erste und zweite formgebende Element (12a, 12b) voneinander beabstandet sind und jeweils eine erste Seitenwand (22) und eine zweite Seitenwand (23), jeweilige Fußabschnitte zum Anbringen jedes formgebenden Elements (12a, 12b) an die Außenhaut, die an ersten Enden der ersten und zweiten Seitenwand (22, 23) gebildet sind, und einen horizontalen Abschnitt zum Verbinden der ersten und zweiten Seitenwand, der an zweiten Enden der ersten und zweiten Seitenwand (22, 23) gebildet ist, umfassen, wobei das erste und zweite formgebende Element (12a, 12b) jeweils mehrere erste Ausschnitte (15) haben, die Längsverstärkungen (16) aufnehmen, und mehrere zweite Ausschnitte (20), die zwischen benachbarten ersten Ausschnitten (15) des ersten formgebenden Elements (12a) und des zweiten formgebenden Element (12b) ausgestaltet sind, wobei genau einer der mehreren zweiten Ausschnitte an mindestens einem Längsendabschnitt des ersten formgebenden Elements (12a) und des zweiten formgebenden Elements (12b) angeordnet ist und ein Kopplungselement (25) aufnimmt, welches das erste formgebende Element (12a) und das zweite formgebende Element (12b) koppelt, wobei der genau eine zweite Ausschnitt in jedem Fall als eine Öffnung in der ersten und zweiten Seitenwand (22, 23) des ersten formgebenden Elements (12a) und des zweiten formgebenden Elements (12b) ausgestaltet ist, wobei das Kopplungselement (25) an den zweiten Ausschnitt (20), der an dem Längsendabschnitt des ersten formgebenden Elements (12a) angeordnet ist, und an den zweiten Ausschnitt (20), der an dem Längsendabschnitt des zweiten formgebenden Elements (12b) benachbart zu dem ersten formgebenden Element (12a) angeordnet ist, auf jeder Seite der jeweiligen formgebenden Elemente (12a, 12b) montiert ist.

2. Luftfahrzeug oder Raumfahrzeug nach Anspruch 1, **dadurch gekennzeichnet, dass** die Öffnung in jedem Fall an der gleichen Position in den gegenüberliegenden Seitenwänden derart angeordnet ist, dass die Öffnung, die in einer ersten Seitenwand (22) angeordnet ist, und die Öffnung, die in einer zweiten Seitenwand (23) angeordnet ist, zueinander in einer Richtung senkrecht zu einer Längsrichtung des ersten formgebenden Elements (12a) ausgerichtet sind.

3. Luftfahrzeug oder Raumfahrzeug nach Anspruch 1, **dadurch gekennzeichnet, dass** die Öffnung in jedem Fall an unterschiedlichen Positionen in den gegenüberliegenden Seitenwänden derart angeordnet ist, dass die Öffnung, die in einer ersten Seitenwand (22) angeordnet ist, und die Öffnung, die in einer zweiten Seitenwand (23) angeordnet ist, zueinander in einer Richtung senkrecht zu einer Längsrichtung des ersten formgebenden Elements (12a) nicht ausgerichtet sind.

4. Luftfahrzeug oder Raumfahrzeug nach einem der Ansprüche 1 bis 3, **dadurch gekennzeichnet, dass** die Öffnung in den gegenüberliegenden Seitenwänden entlang einer Querachse des ersten formgebenden Elements (12a) ausgestaltet ist.

5. Luftfahrzeug oder Raumfahrzeug nach einem der vorhergehenden Ansprüche, **dadurch gekennzeichnet, dass** das erste formgebende Element (12a) ein omegaförmiges, kreisförmiges, elliptisches, abgerundet eckiges oder polygonales Profil hat.

6. Luftfahrzeug oder Raumfahrzeug nach einem der vorhergehenden Ansprüche, **dadurch gekennzeichnet, dass** der zweite Ausschnitt (20) ausgestaltet ist, um Kabel oder hydraulische Leitungen entlang einer Längsachse des Luftfahrzeugs oder Raumfahrzeugs durch das erste formgebende Element (12a) zu führen.

7. Luftfahrzeug oder Raumfahrzeug nach einem der vorhergehenden Ansprüche, **dadurch gekennzeichnet, dass** der zweite Ausschnitt (20) ausgestaltet ist, um Halter, Metallbeschläge oder andere Strukturverbindungselemente aufzunehmen, um Komponenten, wie etwa insbesondere Überkopf-Gepäckablagen oder Seitenwandplatten, zu befestigen.

8. Luftfahrzeug oder Raumfahrzeug nach einem der vorhergehenden Ansprüche, **dadurch gekennzeichnet, dass** das erste formgebende Element (12a) aus einem Kohlenstofffaser verstärktem Kunststoffmaterial, einem Metall, einer Metalllegierung oder einem hybriden Material ausgestaltet ist.

## Revendications

1. Aéronef ou astronef comportant un revêtement extérieur (10) et un élément structurel, l'élément structurel comprenant :
une première partie de cadre courant (12a) et une seconde partie de cadre courant (12b) renforçant le revêtement extérieur (10), lesquelles sont courbées en forme d'arc dans leur direction longitudinale conformément à un contour intérieur du revêtement extérieur (10), les première et seconde parties de cadre courant (12a, 12b) étant espacées l'une de l'autre et comprenant chacune une première paroi latérale (22) et une seconde paroi latérale (23), des portions de pied respectives pour attacher chaque partie de cadre courant (12a, 12b) au revêtement extérieur formées au niveau de premières extrémités desdites première et seconde parois latérales (22, 23), et une portion horizontale pour relier lesdites première et seconde parois latérales formées au niveau de secondes extrémités desdites première et seconde parois latérales (22, 23), dans lequel les première et seconde parties de cadre courant (12a, 12b) ont chacune une pluralité de premières découpes (15) recevant des renforcements longitudinaux (16) et une pluralité de secondes découpes (20), qui est configurée entre des premières découpes adjacentes (15) de la première partie de cadre courant (12a) et de la seconde partie de cadre courant (12b), dans lequel exactement une de la pluralité de secondes découpes est agencée au moins au niveau d'une portion d'extrémité longitudinale de la première partie de cadre courant (12a) et de la seconde partie de cadre courant (12b) et reçoit une partie de couplage (25) couplant la première partie de cadre courant (12a) et la seconde partie de cadre courant (12b), la exactement une seconde découpe étant, dans chaque cas, configurée comme une ouverture dans lesdites première et seconde parois latérales (22, 23) de la première partie de cadre courant (12a) et de la seconde partie de cadre courant (12b), dans lequel la partie de couplage est montée sur la seconde découpe (20) agencée au niveau de la portion d'extrémité longitudinale de la première partie de cadre courant (12a) et sur la seconde découpe (20) agencée au niveau de la portion d'extrémité longitudinale de la seconde partie de cadre courant (12b) adjacente à la première partie de cadre courant (12a) de chaque côté des parties de cadre courant respectives (12a, 12b).

2. Aéronef ou astronef selon la revendication 1' **caractérisé en ce que** l'ouverture est, dans chaque cas, agencée au niveau de la même position dans les parois latérales opposées de telle sorte que l'ouverture agencée dans une première paroi latérale (22) et l'ouverture agencée dans une seconde paroi latérale (23) sont alignées l'une avec l'autre dans une direction perpendiculaire à une direction longitudinale de la première partie de cadre courant (12a).

3. Aéronef ou astronef selon la revendication 1, **caractérisé en ce que** l'ouverture est, dans chaque cas, agencée au niveau de positions différentes dans les parois latérales opposées de telle sorte que l'ouverture agencée dans une première paroi latérale (22) et l'ouverture agencée dans une seconde paroi latérale (23) ne sont pas alignées l'une avec l'autre dans une direction perpendiculaire à une direction longitudinale de la première partie de cadre courant (12a).

4. Aéronef ou astronef selon une quelconque des revendications 1 à 3, **caractérisé en ce que** l'ouverture dans les parois latérales opposées est configurée le long d'un axe transversal de la première partie de cadre courant (12a).

5. Aéronef ou astronef selon une quelconque des revendications précédentes, **caractérisé en ce que** la première partie de cadre courant (12a) a un profilé en forme d'oméga, circulaire, elliptique, à coins arrondis ou polygonal.

6. Aéronef ou astronef selon une quelconque des revendications précédentes, **caractérisé en ce que** la seconde découpe (20) est configurée pour guider des lignes câblées ou hydrauliques le long d'un axe longitudinal de l'aéronef ou astronef à travers la première partie de cadre courant (12a).

7. Aéronef ou astronef selon une quelconque des revendications précédentes, **caractérisé en ce que** la seconde découpe (20) est configurée pour recevoir des supports, des raccords métalliques ou d'autres éléments de liaison structurelle afin de fixer des éléments, tels que, en particulier, des compartiments à bagages suspendus ou des panneaux de parois latérales.

8. Aéronef ou astronef selon une quelconque des revendications précédentes, **caractérisé en ce que** la première partie de cadre courant (12a) est configurée à partir d'un matériau en plastique renforcé de fibres de carbone, d'un métal, d'un alliage métallique ou d'un matériau hybride.
